# NOUVEAU FASCICULE DE BREVET EUROPEEN

(11) **EP 0 118 349 B2**
(45) Date de publication et mention de la décision concernant l'opposition: **03.11.1999**
(45) Mention de la délivrance du brevet: 07.05.1986
(21) Numéro de dépôt: 84400315.2
(22) Date de dépôt: 16.02.1984
(51) Int. Cl.: B01D 53/04, B01D 53/26, F26B 21/08, B01J 8/04

(54) **Réacteur et installation d'épuration par adsorption**
Reaktor und Einrichtung für Adsorptionsreinigung
Reactor and installation for purifying by adsorption

(30) Priorité: 28.02.1983 FR 8303250
(43) Date de publication de la demande: 12.09.1984
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bosquain, Maurice, F-75016 Paris (FR); Grenier, Maurice, F-75018 Paris (FR); Hay, Léon, F-75018 Paris (FR); Lapeyre, Paul, F-94360 Bry-sur-Marne (FR); Lehman, Jean-Yves, F-94700 Maisons Alfort (FR); Petit, Pierre, F-92290 Chatenay-Malabry (FR); Sauty, Pierre, F-78000 Versailles (FR)
(74) Mandataire: Jacobson, Claude

(56) Documents cités:
- DE-A- 2 545 218
- DE-A- 2 742 752
- DE-B- 2 616 999
- US-A- 2 379 321
- US-A- 2 517 525
- US-A- 3 620 685
- US-A- 3 652 231
- US-A- 4 244 922
- US-A- 4 276 265
- US-A- 4 283 368
- DIN 24043 (October 1981)

## Description

La présente invention est relative à un réacteur, notamment un récipient d'épuration de fluide par adsorption, du type décrit dans le préambule de la revendication 1 ou de la revendication 2.

L'invention s'applique notamment à la dessication-décarbonatation de l'air atmosphérique avant son entrée dans la partie froide des installations de séparation des constituants de l'air par distillation.

La technique de l'épuration de l'air par adsorption présente des avantages importants par rapport à la technique concurrente d'épuration par dépôt frigorifique dans des échangeurs réversibles : elle offre la possibilité de fournir jusqu'à 70 % du débit d'air sous forme de gaz purs, 30 % de l'azote sec et décarbonaté produit étant suffisants pour la régénération des adsorbants ; elle ajoute une sécurité supplémentaire d'exploitation lorsqu'elle comporte un lit de tamis moléculaire qui a pour propriété d'arrêter, outre le CO₂, d'autres impuretés présentes en traces dans l'air et dangereuses par effet d'accumulation, comme l'acétylène : la fiabilité de cette technique est par ailleurs excellente, et son exploitation aisée ; elle limite les à-coups, les bruits et les pertes de gaz liés aux inversions, qui sont beaucoup moins fréquentes que dans le cas de la technique utilisant des échangeurs réversibles.

Par contre, l'épuration par adsorption implique un coût élevé tant en investissement qu'en dépenses de fonctionnement, notamment lorsqu'il s'agit d'épurer de grandes quantités de fluide. En ce qui concerne l'investissement, un poste important est constitué par l'adsorbant lui-même, qui, à titre d'exemple, peut représenter environ 30% du coût total de l'installation d'épuration pour une installation produisant environ 1 000 tonnes par jour d'oxygène.

On connait par ailleurs des réacteurs catalytiques dans lesquels le fluide traité traverse radialement un ou plusieurs lits annulaires de particules de catalyseur (voir, par exemple, US-A-2 517 525). Cependant, lorsque les réactions à effectuer impliquent des variations fréquentes de température du fluide circulant dans l'appareil, comme c'est le cas en particulier pour les traitements par adsorption les agencements connus présentent des risques élevés de rupture et de détérioration des particules dus aux dilatations - contractions thermiques differentielles.

L'invention a pour but de permettre d'étendre la technologie des lits annulaires à de telles réactions et, en particulier, de permettre de réaliser de façon fiable et répétée et à un coût réduit une épuration par adsorption de grandes quantités de fluide, notamment d'air atmosphérique, tout en conservant une bonne distribution du fluide traité et des vitesses de circulation des fluides compatibles avec les propriétés mécaniques des particules d'adsorbant utilisées.

A cet effet, l'invention a pour objet un réacteur, notamment un récipient d'épuration par adsorption, du type précité, caractérisé, dans un mode de réalisation, par la partie caractérisé de la revendication 1 et, dans un autre mode de réalisation, par celle de la revendication 2.

D'autres caractéristiques sont décrites dans les revendications 3 à 15.

L'invention a également pour objet une installation d'épuration par adsorption qui comprend au moins un récipient d'épuration tel que défini ci-dessus dont la région annulaire est reliée à la source de fluide à épurer. Le sens de circulation qui en résulte peut paraître paradoxal dans le cas de l'épuration de l'air atmosphérique lorsqu'on utilise deux lits d'adsorbant constitués l'un d'alumine et l'autre de tamis moléculaire; en effet, l'air doit traverser en premier lieu l'alumine, dont les particules ont à la fois une densité et une granulométrie supérieures à celles du tamis moléculaire et qui, par suite, autorise une vitesse de circulation avant attrition plus grande que le tamis moléculaire. De plus, on sait que la perte de charge par unité de longueur parcourue, qui a pour conséquence défavorable une augmentation de l'énergie de compression nécessaire, est d'autant plus élevée que la vitesse est plus grande et que la granulométrie est plus fine.

Ces deux considérations semblent conduire logiquement à disposer l'alumine radialement à l'intérieur du tamis moléculaire. Cependant, avec la disposition inverse, ceci peut être compensé par le fait que, pendant la phase de régénération à chaud, le fluide chaud cède l'essentiel, voire la totalité, de sa chaleur aux deux lits d'adsorbant avant d'atteindre la grille extérieure. Par suite, celle-ci subit un échauffement plus limité et, de ce fait, des déformations moins importantes, ce qui a des conséquences favorables sur la tenue mécanique des grilles et des lits d'adsorbant, comme cela sera expliqué plus loin : de plus, l'enveloppe du récipient ne nécessite pas d'isolation thermique particulière, puisqu'à cet emplacement on ne craint plus les pertes de chaleur.

La revendication 17 décrit un mode de réalisation particulier de cette installation.

Quelques exemples de réalisation de l'invention vont maintenant être décrits en regard des dessins annexés, sur lesquels :
la figure 1 est une vue schématique en coupe longitudinale d'un premier mode de réalisation d'un récipient d'épuration par adsorption conforme à l'invention ;
les figures 2 et 3 représentent deux détails de ce récipient ;
la figure 4 est une vue analogue à la figure 1 d'un deuxième mode de réalisation d'un récipient d'épuration par adsorption conforme à l'invention ;
la figure 5 est une demi-vue en coupe transversale prise suivant la ligne V-V de la figure 4 :
la figure 6 est une vue partielle en perspective d'une variante ; et
la figure 7 est une vue partielle en coupe d'une autre variante.

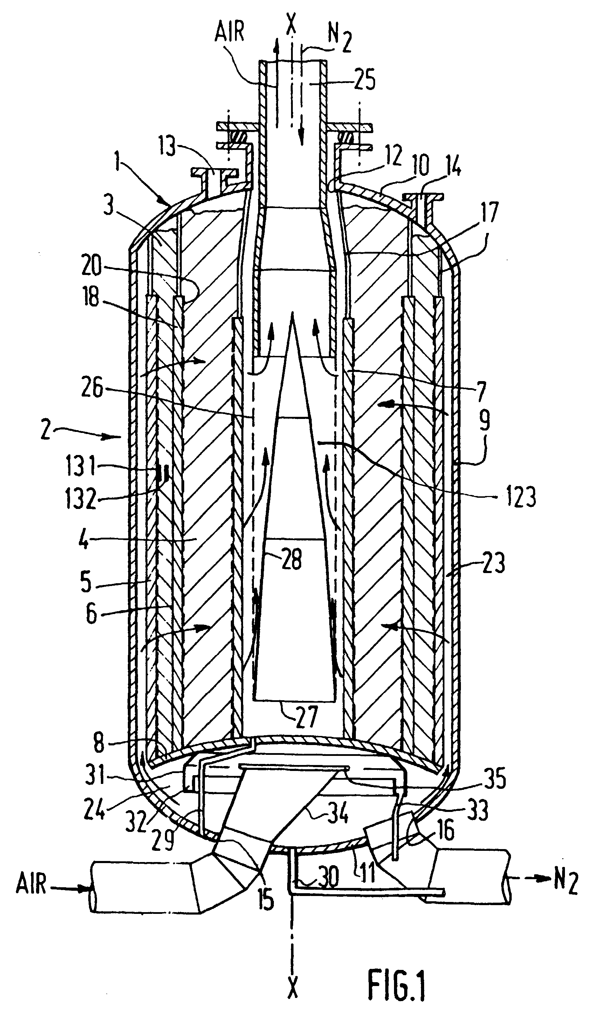

Le récipient d'épuration par adsorption 1 représenté à la figure 1 est dans l'ensemble de révolution autour d'un axe X-X vertical et est destiné à la dessication-décarbonatation de l'air atmosphérique destiné à être traité dans la partie froide d'une installation de distillation de cet air. Ce récipient 1 est constitué essentiellement d'une enveloppe extérieure 2 qui contient deux lits d'adsorbant 3 et 4 retenus par trois grilles 5, 6 et 7 et par un fond suspendu rigide 8.

L'enveloppe 2, qui est fixée sur un bâti (non représenté) par des organes appropriés, est constituée d'une virole cylindrique 9 à section transversale circulaire complétée à chaque extrémité par une calotte 10, 11 à action longitudinale semi-elliptique. La calotte supérieure 10 présente une ouverture centrale 12, une couronne intérieure d'ouverture 13 et une couronne extérieure d'ouvertures 14, tandis que la calotte inférieure 11 présente une ouverture 15 reliée à une source d'air à épurer (non représentée) et une ouverture 16 d'échappement à l'air libre du fluide de régénération, qui est par exemple de l'azote sec et décarbonaté provenant de la partie froide de l'installation de distillation,

Les trois grilles 5 à 7 sont cylindriques, d'axe X-X, Chacune d'elles est suspendue à la calotte supérieure 10 par l'intermédiaire d'un anneau de garde respectif 17 en tôle pleine. L'anneau 17 central se raccorde au pourtour de l'ouverture centrale 12, l'anneau 17 intermédiaire à une circonférence de la calotte 10 située entre les couronnes d'ouvertures 13 et 14, et l'anneau 17 extérieur à une circonférence de la calotte 10 située entre la couronne d'ouvertures 14 et le raccordement de cette calotte à la virole 9. Les ouvertures 13 et 14 servent au remplissage par gravité et à la vidange par aspiration des deux lits d'adsorbant 3 et 4, respectivement dans l'espace annulaire compris entre les grilles 6 et 7 et dans celui compris entre les grilles 5 et 6.

A son extrémité inférieure, chaque grille est fixée à la face supérieure du fond 8. Celui-ci est plein, bombé vers le haut, et son diamètre extérieur est sensiblement égal à celui de la grille extérieure 5.

Les grilles 5 à 7 comportent chacune une ossature 18. Un grillage fin 20 est fixé sur la face intérieure des ossatures des grilles 5 et 6 et sur la face extérieure de celle de la grille 7, afin de retenir les particules d'adsorbant.

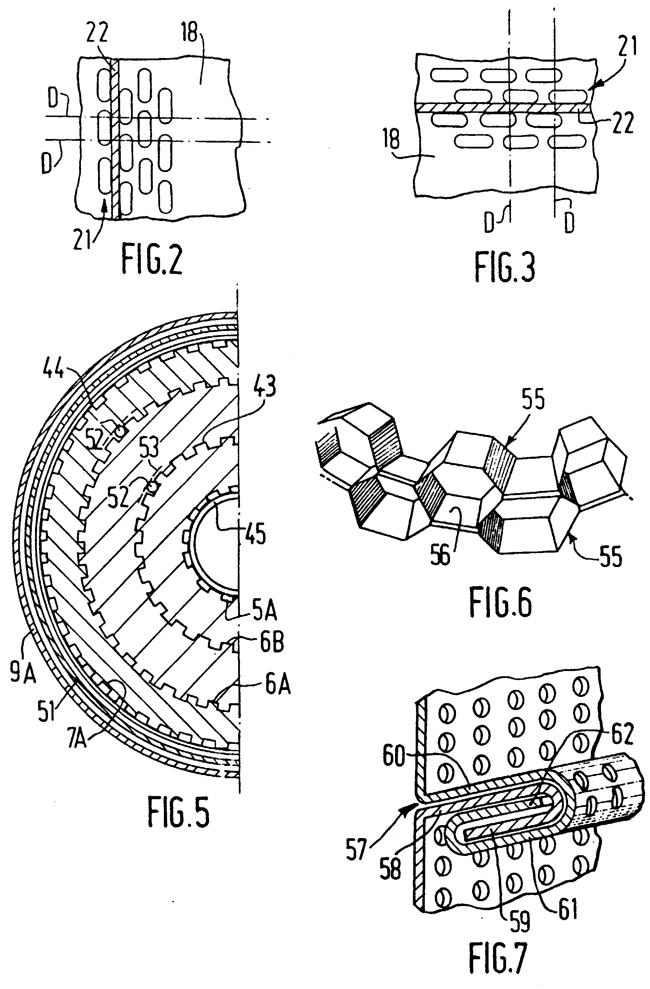

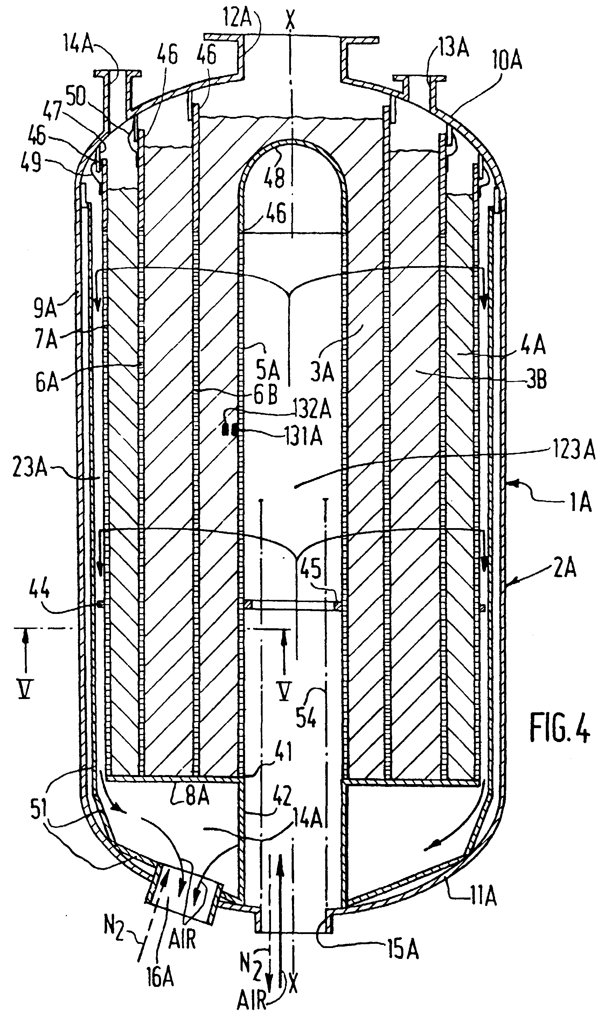

Comme on le voit aux figures 2 et 3, les trois ossatures 18 sont réalisées à partir de tôles perforées ayant la même géométrie de perforations. Chacune de ces tôles présente des rangées équidistantes 21 de trous oblongs. Ces trous sont décalés d'une demi-longueur d'une rangée à la suivante, de sorte que toute droite D perpendiculaire aux rangées 21 rencontre une multitude de trous, alors qu'entre les rangées 21 subsistent des bandes pleines 22, dont une a été représentée par des hachures sur les figures 2 et 3.

Ainsi, la tôle perforée considérée possède des propriétés mécaniques très différentes suivant la direction dans laquelle elle est sollicitée ; parallèlement aux rangées 21, elle ne présente que l'élasticité propre du métal, du fait des bandes pleines 22. Perpendiculairement à ces rangées 21, au contraire, elle présente une souplesse élastique considérablement plus grande.

Dans l'ossature 18 de la grille intermédiaire 6, les rangées 21 sont disposées verticalement, comme représenté à la figure 2. On peut donc considérer la grille 6 comme sensiblement rigide axialement et élastiquement souple dans le sens circonférentiel (ou radial). Dans l'ossature 18 des deux grilles extrêmes 5 et 7, au contraire, les rangées 21 sont disposées horizontalement, suivant des cercles, comme représenté à la figure 3. Ces deux grilles 5 et 7 sont donc sensiblement rigides circonférentiellement (ou radialement) et élastiquement souples dans le sens axial. Il faut comprendre l'adjectif « rigide » comme signifiant que les seules déformations possibles dans le sens considéré (axial ou circonférentiel) sont dues à l'élasticité propre du métal et aux dilatations-contractions d'origine thermique. Bien entendu, chaque grillage fin 20 possède une souplesse au moins égale à celle de l'ossature qui le porte, au moins dans la direction correspondante. Les grillages 20 peuvent en particulier être du type « Métal Déployé ». Il est à noter que pour pouvoir résister à la pression extérieure à laquelle elle est soumise, la grille intérieure 7 peut posséder une ossature 18 de plus forte épaisseur et peut aussi être pourvue d'anneaux de renfort intérieurs (non représentés).

On voit que l'espace intérieur de l'enveloppe 2 comprend :
― entre la virole 9 et la grille extérieure 5, une étroite région annulaire (première région) 23, qui se prolonge sous le fond 8 par une chambre 24 comprise entre ce fond et la calotte inférieure 11 ;
― entre les grilles extérieure 5 et intermédiaire 6, une région annulaire s'étendent de la calotte supérieure 10 au fond 8. Cette région est emplie par les ouvertures 14 du lit adsorbant 3, lequel est constitué de particules d'alumine, qui sont de préférence des billes ayant un diamètre de 2 à 5 mm;
― entre les grilles intermédiaire 6 et intérieure 7, une région annulaire s'étendant également de la calotte supérieure 10 au fond 8. Cette région est emplie par les ouvertures 13 du lit d'adsorbant 4, lequel est constitué de particules de tamis moléculaire, par exemple de tamis moléculaire de type X ayant des pores de 1 nm (10Å), en billes ayant un diamètre de 1,6 à 2,5 mm ;
― à l'intérieur de la grille intérieure 7, un espace central 123 (deuxième région).

Le récipient 1 est complété par une tubulure 25 introduite coaxialement à joint étanche dans l'ouverture 12 de la calotte supérieure 10 et maintenue par une fixation par brides. Cette tubulure porte un filtre tubulaire 26 en grillage métallique, à mailles fines, par exemple de l'ordre de 40 µm, dont la base 27 est reliée à celle d'un organe de distribution non perforé 28 de forme à peu près conique s'étendant sur toute la hauteur du filtre 26. De plus, un conduit de purge de poussières 29 part de la zone centrale du fond 8 et traverse la calotte inférieure 11, et un conduit 30 de purge d'eau part du point bas de cette calotte 11 et débouche dans la tubulure de sortie d'azote reliée à l'ouverture 16.

La présence du fond plein 8 en regard de l'ouverture 15 d'admission d'air est mise à profit pour constituer un séparateur d'eau liquide : sur la face inférieure du fond 8 est fixée une jupe annulaire 31, conique divergente puis cylindrique, dont la partie d'extrémité est rebroussée pour constituer une rigole collectrice 32. Du fond de celle-ci partent des tubes de vidange 33 qui débouchent dans la tubulure de sortie d'azote. L'air est envoyé sur le fond 8 par une tubulure divergente 34 dont l'extrémité, proche de ce fond, est pourvue d'une collerette extérieure horizontale 35.

Bien entendu, tous les conduits associés au récipient 1 sont équipés de vannes (non représentées) qui permettent d'effectuer le cycle de fonctionnement qui va maintenant être décrit.

### Phase d'épuration

L'ouverture 15 est mise en communication avec la source d'air, par exemple avec le refoulement à environ 6 bars absolus du compresseur d'air de l'installation de distillation; l'ouverture 16 est obturée, et le tubulure 25 est mise en communication avec l'extrémité d'entrée d'air de la ligne d'échange thermique de la partie froide de l'installation.

L'air comprimé heurte le fond 8. Par effet centrifuge, les éventuelles gouttelettes d'eau qu'il contient ruissellent dans toutes les directions sur ce fond, puis sur la jupe 31; elles se rassemblent dans la rigole 32 et s'évacuent par les tubes 33. Grâce à la forme profonde et étroite de la rigole, l'air n'a pas tendance à réentraîner l'eau collectée, et le film d'eau qui se crée à l'intérieur de la tubulure 34 est, grâce à la collerette 35, envoyé également dans cette rigole.

L'air ainsi débarrassé de l'eau liquide se répartit ensuite dans la chambre 24, d'où il passe à faible vitesse dans la région annulaire extérieure (première région) 23; l'air traverse ensuite radialement à l'axe X-X le lit d'alumine 3, qui en adsorbe l'eau, puis le lit de tamis moléculaire 4, qui en adsorbe le CO₂. La faible épaisseur des lits 3 et 4 conduit à une faible perte de charge lors de leur traversée.

L'air sec et décarbonaté, ayant ainsi pénétré dans l'espace central 123, doit ensuite traverser le filtre 26, qui retient les éventuelles poussières d'adsorbant entraînées, puis sort du récipient 1 par la tubulure 25. L'organe 28 assure de la base au sommet du filtre 26 une augmentation progressive de la section de passage de l'air qui correspond à l'augmentation progressive du débit d'air. On obtient ainsi une vitesse ascendante uniforme de l'air dans le filtre 26, ce qui permet d'assurer une distribution uniforme de l'air sur la hauteur des lits 3 et 4. L'uniformité de cette distribution suppose un profil déterminé de l'organe 28, en forme de paraboloïde de révolution. Cependant, pour faciliter la fabrication de cet organe, on peut le réaliser avec une approximation suffisante sous la forme de plusieurs tronçons de cônes superposés dont l'angle au sommet croît de bas en haut comme représenté à la figure 1.

### Phase de régénération

Les deux lits d'adsorbant sont régénérés en isolant l'ouverture 15 de la source d'air, en raccordant la tubulure 25 au conduit d'azote basse pression (pression de l'ordre de 1 bar absolu) sec et décarbonaté sortant de la ligne d'échange thermique de l'installation de distillation, et en mettant l'ouverture 16 en communication avec l'atmosphère environnante. De façon classique, ces manoeuvres sont précédées par une opération de décompression du récipient si l'air traité est fourni sous une pression nettement supérieure, comme c'est le cas dans le présent exemple.

Par conséquent, l'azote pénètre dans l'espace central 123 du récipient 1 par la tubulure 25, traverse le filtre 26 vers l'extérieur, en le décolmatant éventuellement, puis traverse successivement le lit 4 et le lit 3 en se chargeant du CO₂ et de l'eau adsorbés pendant la phase d'épuration précédente. L'azote passe enfin dans la région extérieure 23, puis dans la chambre 24 et est mis à l'air libre par l'ouverture 16.

Pendant la première partie de la régénération, l'azote est chauffé avant d'atteindre le récipient 1. Un front de chaleur se propage progressivement de la grille Intérieure 7 à la grille extérieure 5, en créant à chaque instant entre les divers points des grilles et des lits d'adsorbant d'importants gradients ou écarts de température. Pendant la seconde partie de la régénération, on arrête le chauffage de I'azote pour ramener les deux lits 3 et 4 à leur température d'adsorption initiale. Un front de refroidissement, créant un gradient de température de sens opposé au précédent, se propage alors de la grille intérieure 7 à la grille extérieure 5. La structure des trois grilles, décrite plus haut, permet de supporter de façon fiable et répétée les dilatations-contractions d'origine thermique. On considérera, ci-dessous, tout d'abord les dilatations-contractions qui se produisent dans le sens axial, puis celles orientées circonférentiellement.
(1) Dilatations-contractions axiales : seule la grille intermédiaire 6 est rigide axialement. Elle supporte donc à elle seule le poids du fond 8, des trois grilles et des deux lits 3 et 4 et subit uniquement l'allongement élastique dû à ce poids et les contractions et les dilatations dues aux changements de température auxquels elle est soumise. Lorsque cette grille 6 se dilate ou se contracte thermiquement, elle entraîne ans difficulté les deux autres grilles 5 et 7 de façon telle que tous les points correspondants des trois grilles situés initialement dans un même plan horizontal se retrouvent après la dilatation ou la contraction considérée dans un autre plan horizontal commun. Par ailleurs, lorsqu'une des deux autres grilles 5 ou 7 est chauffée ou refroidie, sa tendance à la dilatation ou à la contraction est compensée par son élasticité, sa longueur totale étant imposée par celle de la grille 6. Par suite, aucun de ses points ne se déplace verticalement.
Par conséquent, les gradients cycliques de température ne provoquent nulle part de glissement relatif entre la paroi d'une grille et celles des deux autres grilles; il ne se produit donc pas de cisaillement vertical des lits d'adsorbant et, par suite, pas d'abrasion des particules qui les constituent.
(2) Dilatations-contractions circonférentielles : lorsque, au début de la régénération, le front de chaleur ne concerne que la grille intérieure 7, celle-ci se dilate radialement, quoique dans une faible mesure du fait de son petit diamètre. Elle exerce donc un effort centrifuge sur le lit 4, dont le niveau supérieur ne peut remonter du fait du phénomène connu sous le nom d'« effet de silo ». Par suite, la dilatation de la grille 7 développe une pression dans le lit 4, mais cette pression est transmise au lit 3 par la grille intermédiaire 6 grâce à la grande souplesse radiale de celle-ci. La réduction de volume du lit intérieur 4 résultant de la dilatation de la grille 7 est ainsi répartie sur l'ensemble des deux lits, ce qui réduit considérablement les contraintes exercées sur les particules du lit 4 et sur la grille 7.
Ces contraintes augmentent ensuite au fur et à mesure de l'échauffement, et donc de la dilatation, des particules d'adsorbant des deux lits, puis elles se relâchant, si le front de chaleur atteint la grille extérieure 5, grâce à la dilatation radiale importante de celle-ci, et, dans tous les cas, au début de la phase de refroidissement, lors de la contraction de la grille intérieure 7, puis des deux lits d'adsorbant. En pratique, on coupe le chauffage de l'azote de régénération lorsque le front de chaleur atteint sensiblement le lit 3.

Lorsqu'ensuite le refroidissement atteint la grille extérieure 5, cette grille, du fait de sa contraction circonférentielle, exerce une poussée centripète sur le lit extérieur 3, ce d'une façon importante du fait du grand diamètre de cette grille. Comme précédemment, l'effet de silo empêche le niveau supérieur du lit 3 de remonter, de sorte qu'une pression se développe dans ce lit. De nouveau, la grille 6, radialement souple, transmet cette pression au lit 4, et la diminution de volume imposée au lit extérieur 3 se répartit sur les deux lits, ce qui réduit considérablement les contraintes exercées sur les particules du lit 3 et sur la grille 5.

Des essais ont montré qu'il était possible d'effectuer les régénérations successives en maintenant les contraintes auxquelles sont soumises de façon répétée les particules des deux lits 3 et 4 à un niveau suffisamment bas pour éviter toute destruction de ces particules et pour rester dans le domaine de déformation élastique de celles-ci, même pendant la période la plus défavorable au cours de laquelle, au début de la régénération, la grille intérieure 7 ainsi qu'une partie des adsorbants sont soumises à la température du gaz de régénération chauffé alors que la grille extérieure (celle de plus grand diamètre) n'est pas encore soumise à cette température. Dans ces conditions, il ne se produit pas, au cours des cycles successifs, de tassement progressivement croissant des deux lits d'adsorbant lorsque le volume qui leur est offert est maximal (grille 7 froide, grille 5 chaude), et le risque de rupture des grilles est écarté.

Pour diminuer encore le niveau des contraintes dues aux cycles thermiques, on peut piloter le chauffage de l'azote de façon que le front de chaleur ne parvienne jamais à la grille extérieure 5, ce au moyen d'une sonde de température 131 disposée dans le lit 3, très prés de cette grille. On procède alors par approximations successives d'un cycle au suivant, en augmentant la quantité de chaleur fournie à l'azote jusqu'à ce qu'on détecte l'apparition du front de chaleur à la sonde 131. Ce pilotage est facilité, et peut même être effectué aisément sans l'aide d'un calculateur, si l'on utilise en outre une deuxième sonde de température 132 disposée dans le lit 3 à une petite distance radiale de la sonde 131 en direction de l'axe X-X. L'optimum du chauffage est obtenu lorsque, à chaque régénération, le front de chaleur atteint la sonde 132 mais pas la sonde 131. Dans ces conditions, non seulement la grille 5 ne subit aucune dilatation-contraction d'origine thermique, mais encore l'enveloppe 2 n'est jamais chauffée et peut donc être réalisée sans isolation thermique particulière.

Le récipient d'épuration 1A de la figure 4 est également, dans l'ensemble, de révolution autour d'un axe vertical X-X. Il comprend une enveloppe extérieure 2A, de même forme générale que l'enveloppe 2 de la figure 1, constituée d'une virole cylindrique 9A, d'une calotte supérieure 10A et d'une calotte inférieure 11A.

La calotte supérieure 10A est pourvue d'une ouverture centrale 12A et de deux couronnes d'ouvertures de remplissage 13A et 14A. La calotte inférieure 11A comporte une ouverture centrale 15A d'entrée d'air et de sortie d'azote, et une ouverture latérale 16A d'entrée d'azote et de sortie d'air.

Dans la partie inférieure de l'enveloppe 2A est positionné un fond plein rigide 8A. Ce fond présente une ouverture centrale 41 dont le pourtour est fixé à l'extrémité supérieure d'un tube rigide 42. La base de ce dernier est fixée autour de l'ouverture centrale 15A de la calotte inférieure 11A.

Une grille intérieure 5A est fixée à son extrémité inférieure au fond 8A, autour de l'ouverture 41, et une grille extérieure 7A est fixée à son extrémité inférieure à la périphérie du fond 8A, dont le diamètre est légèrement inférieur à celui de la virole 9A. Une grille cylindrique intermédiaire 6A est fixée à sa base au fond 8A, ainsi qu'une grille intermédiaire supplémentaire 6B située entre les grilles 5A et 6A.

Chacune des grilles 5A, 6A, 6B et 7A est constituée d'une tôle perforée d'ouvertures suffisamment petites pour arrêter les particules d'adsorbant, et dont la disposition et la forme ne confèrent pas à ces grilles de souplesse élastique notable dans le sens vertical. Cette tôle possède une forme générale cylindrique d'axe X-X et présente des nervures longitudinales 43 alternativement intérieures et extérieures adjacentes les unes aux autres (figure 5) qui lui donnent un aspect ondulé. Les grilles extrêmes 5A et 7A sont pourvues, respectivement intérieurement et extérieurement, d'une série d'anneaux horizontaux de rigidification 44, 45, un anneau de chaque série ayant été représenté à la figure 4. Par conséquent, ces grilles extrêmes sont rigides dans les deux sens radial et axial, tandis que les deux grilles intermédiaires 6A et 6B sont rigides axialement mais élastiquement souples dans le sens radial. De plus, toutes les grilles sont libres à leur extrémité supérieure, où elles sont équipées d'anneaux métalliques 46. Les trois anneaux 46 extérieurs sont guidés extérieurement à coulissement axial par des cloisons de guidage cylindriques respectives 47 fixées à la calotte 10A, l'une à l'extérieur par rapport aux ouvertures 14A, la seconde entre les ouvertures 14A et les ouvertures 13A et la troisième entre ces dernières et l'ouverture centrale 12A. L'anneau de garde 46 central se termine par un dôme supérieur 48. Les anneaux 46, les cloisons de guidage 47 et le dôme 48 sont non perforés.

L'espace annulaire compris entre les grilles 5A et 6B est empli par l'ouverture 12A d'un lit 3A d'alumine à grosse granulométrie (billes ayant un diamètre de 5 à 10 mm), qui autorise des vitesses de circulation de gaz relativement élevées. L'espace annulaire adjacent compris entre les grilles 6A et 6B est empli par les ouvertures 13A d'un lit 3B d'alumine à plus faible granulométrie (billes ayant un diamètre de 2 à 5 mm), et l'espace annulaire compris entre les grilles 6A et 7A est empli par les ouvertures 14A d'un lit 4A de tamis moléculaire (tamis moléculaire de type X ayant des pores de 1 nm (10Å), en billes ayant un diamètre de 1,6 à 2,5 mm), dont la vitesse limite d'attrition est inférieure à celle de l'alumine à faible granulométrie. La vidange de ces trois lits s'effectue par aspiration à travers les ouvertures de remplissage, comme dans le mode de réalisation de la figure 1.

Comme on le voit à la figure 4, on fait en sorte que le niveau du lit 3A ait une hauteur, au-dessus de la base de l'anneau 46 central, au moins égale à l'épaisseur radiale de ce lit 3A ; le niveau du lit 3B est un peu inférieur et est situé légèrement au-dessous du guidage 47 associé à la grille 6B. De même, le niveau du lit 4A est encore un peu inférieur et est situé légèrement au-dessous de la cloison de guidage 47 associée à la grille 6A. Un anneau souple d'étanchéité 49 est fixé par son bord inférieur à la face extérieure de l'anneau 46 extérieur et par son bord supérieur au guide 47 associé. De même, un anneau souple d'étanchéité 50 est fixé par son bord inférieur à la face extérieure de l'anneau 46 associé à la grille 6A, un peu au-dessus du lit 4A, et par son bord supérieur à la cloison de guidage 47 correspondante.

Dans cet exemple, le sens d'écoulement des gaz est inversé par rapport à la figure 1 :
― En phase d'épuration, l'air est envoyé par l'ouverture centrale 15A et le tube 42 dans l'espace central 123A (première région), et traverse radialement vers l'extérieur les trois lits d'adsorbant comme indiqué par les flèches sur la figure 4. L'air se déshydrate en passant dans les deux lits d'alumine 3A puis 3B, puis il se décarbonate dans le tamis moléculaire 4A, sa vitesse diminuant progressivement lors de son éloignement de l'axe central X-X. L'air épuré se rassemble dans l'espace annulaire extérieur 23A (deuxième région) compris entre la grille extérieure 7A et la virole 9A, passe dans la chambre inférieure 24A située sous le fond 8A, et sort du récipient 1A par l'ouverture 16A.
― En phase de régénération, I'azote sec et décarbonaté pénètre dans le récipient 1A par l'ouverture 16A, se répartit dans la chambre 24A puis dans l'espace annulaire 23A, puis traverse successivement dans le sens centripète les trois lits d'adsorbant, pénètre dans l'espace central et sort du récipient par le tube 42 et l'ouverture inférieure 15A. Comme dans l'exemple de la figure 1, les grilles peuvent se dilater librement indépendamment les unes des autres dans le sens axial, et les pressions engendrées par les dilatations différentielles dans le sens circonférentiel sont transmises à l'ensemble des trois lits grâce à la souplesse circonférentielle des deux grilles intermédiaires 6A et 6B. Par ailleurs, les nervures 43 présentent l'avantage d'augmenter la section offerte au passage des gaz.

Au cours de chaque phase du cycle, la hauteur de garde du lit central 3A et la présence des anneaux souples 49 et 50 garantit le passage effectif du gaz à travers les trois lits d'adsorbant.

Il est à noter que dans cet exemple, en début de régénération, l'azote parvient chaud dans l'espace annulaire 23A. Ceci nécessite la présence d'une isolation thermique de l'enveloppe 2A dans toute la partie concernée, par exemple au moyen d'une mince lame d'air statique séparée de l'atmosphère intérieure du récipient par des tôles minces 51 permettant l'équilibrage des pressions.

En variante, les deux grilles intermédiaires 6A et 6B peuvent comporter, au moins dans certains creux d'onde définis par les nervures 43, des éléments chauffants 52, constitués par exemple par des câbles chauffants, dont deux ont été représentés à la figure 5. Chaque élément 52 est recouvert par un grillage fin 53, fixé sur les deux nervures 43 adjacentes, qui évite la venue des particules d'adsorbant au contact direct de cet élément 52. Le grillage 53 possède bien entendu la souplesse circonférentielle nécessaire.

Ce chauffage complémentaire sert à réchauffer l'azote de régénération. L'intérêt de ce réchauffage interne par rapport à un réchauffage classique externe est double : d'une part un gain sur la technologie des tuyauteries, vannes, joints, etc... en amont de la bouteille, qui sont conçus pour une température plus basse, d'autre part un gain sur le temps de régénération car, du fait de l'apport local de chaleur, le transit de la chaleur dans le lit d'adsorbant est plus court.

Dans le but de minimiser le chauffage de l'azote nécessaire à la régénération des trois lits d'adsorbant, le lit intérieur 3A peut être équipé de sondes de température 131A, 132A, proches de la grille intérieure 5A, ce qui conduit à un pilotage de la régénération analogue à ce qui a été décrit plus haut en regard de la figure 1.

Par ailleurs, on peut également prévoir dans le récipient 1A des moyens pour améliorer l'uniformité de la distribution de l'air sur la hauteur de la grille 5A. Ces moyens peuvent par exemple consister en un tube d'entrée 54, représenté en trait mixte à la figure 4, dont le diamètre est inférieur à celui de la grille 5A et qui s'élève de l'ouverture 15A jusqu'à un niveau situé un peu au-dessous de la mi-hauteur de cette grille 5A. En variante, on pourrait encore utiliser un organe tel que l'organe 28 de la figure 1, monté pointe en bas.

On comprend que des tôles ondulées perforées peuvent également être utilisées dans l'agencement de la figure 1 pour constituer des ossatures de grilles présentant une souplesse élastique dans l'une ou l'autre direction : souplesse radiale avec des ondes verticales, souplesse axiale avec des ondes circulaires ou hélicoïdales. Les ondes peuvent, dans chaque cas, présenter des sections variées : carrée, trapézoïdale, sinusoïdale, etc...

D'autres variantes peuvent encore être envisagées pour obtenir des grilles à souplesse unidirectionnelle. Par exemple, on a représenté à la figure 6 une partie d'une ossature cylindrique en nid d'abeille constituée d'un empilage d'anneaux de tôle ondulés 55 à ondes trapézoïdales. Ces ondes sont décalées d'un demi-pas d'un anneau au suivant, et les plages horizontales 56 en regard sont fixées les unes aux autres. L'ossature ainsi constituée est uniquement souple axialement mais est rigide radialement.

Dans une autre variante illustrée à la figure 7, applicable à chacun des modes de réalisation des figures 1 et 4, chaque grille possède une ossature en tôle perforée enroulée en hélice à la manière d'un tuyau flexible. Les spires sont reliées les unes aux autres par un agrafage 57 possédant une certaine élasticité axiale. Cet agrafage peut comprendre par exemple, comme représenté, un pliage 58 vers l'intérieur puis un plage 59 vers l'extérieur pour le bord supérieur de chaque spire, et, pour le bord inférieur de la spire située au-dessus, un triple pliage enveloppant le double pliage précédent et constitué d'un pliage 60 vers l'intérieur, d'un pliage 61 vers l'extérieur et d'un plage final 62 vers l'intérieur.

Par ailleurs, on peut combiner les solutions des figures 1 et 4, en ce qui concerne l'agencement général des grilles, de la façon suivante : en considérant le récipient à deux lits à la figure 1, on remplace les grilles 5 et 7 par des grilles rigides à la fois axialement et radialement, et on les équipe à leur extrémité supérieure de joints, analogues à ceux de la figure 4, qui leur permettent de coulisser sur les anneaux de garde 17 respectifs.

Le récipient 1 ou 1A conforme à l'invention permet de traiter l'air destiné aux installations de séparation de l'air à grande capacité (jusqu'à 320 000 Nm³/h par exemple) avec un débit de régénération modéré, de l'ordre de 40 % de l'azote produit, et avec un coût d'investissement nettement réduit. Il est également à noter que le fort taux de remplissage de l'espace intérieur de l'enveloppe 2 ou 2A, résultant de la disposition en couronnes cylindriques des lits d'adsorbant, conduit à une faible perte de gaz aux inversions.

Par ailleurs, la Demanderesse a constaté que, avec la direction horizontale d'écoulement, les vitesses limites avant attrition des particules d'adsorbants sont plusieurs fois supérieures à celles correspondant à un écoulement vertical ascendant, de sorte qu'elles ne constituent plus nécessairement un facteur limitatif : les vitesses élevées maintenant permises techniquement sont plutôt limitées, et ce à des valeurs nettement supérieures à celles utilisées dans les installations classiques, par d'autres considérations, notamment par celles relatives aux pertes de charge au passage des lits d'adsorbant et aux problèmes d'uniformité de distribution des gaz sur toute la hauteur de ces lits.

On comprend que l'invention s'applique à d'autres types de réactions dans lesquelles un fluide à température variable est amené à traverser un ou plusieurs lits annullaires de particules de matière active, notamment de catalyseurs. On comprend également que de nombreuses caractéristiques décrites en référence au premier mode de réalisation peuvent s'étendre au deuxième mode de réalisation.

## Revendications

1. Réacteur, notamment récipient (1) d'épuration de fluide par adsorption, du type comprenant une enveloppe (2) de révolution autour d'un axe vertical (X-X) qui délimite une première région (23) et une seconde région (123) adaptées pour être raccordées respectivement à une source et à une sortie d'un fluide à traiter, ces deux régions étant séparées par au moins deux espaces destinés à contenir chacun un lit annulaire fixe de particules de matière active (3, 4), chaque espace ayant la forme d'un manchon à génératrices verticales et étant,délimité par deux grilles (5, 6, 7), l'une au moins (6) des grilles étant rigide dans le sens axial et les deux grilles (5, 7) situées respectivement le plus à l'intérieur et le plus à l'extérieur étant rigides dans le sens radial, caractérisé en ce que le réacteur comporte au moins trois grilles, dont au moins une grille intermédiaire commune à deux espaces, en ce que chaque grille est libre de se dilater thermiquement dans le sens axial indépendamment des autres grilles, en ce que la ou chaque grille intermédiaire (6) est souple dans le sens radial, en ce que toutes les grilles (5, 6, 7) sont réunies rigidement entre elles à chaque extrémité, en ce qu'une seule grille (6) est rigide dans le sens axial, tandis que les autres grilles (5, 7) sont souples dans le sens axial, et en ce que les grilles (5, 6, 7) sont suspendues à l'enveloppe (2) et sont reliées à leur base par un fond suspendu rigide (8).

2. Réacteur, notamment récipient (1A) d'épuration de fluide par adsorption, du type comprenant une enveloppe (2A) de révolution autour d'un axe vertical (X-X) qui délimite une première région (123A) et une seconde région (23A) adaptées pour être raccordées respectivement à une source et à une sortie d'un fluide à traiter, ces deux régions étant séparées par au moins deux espaces destinés à contenir chacun un lit annulaire fixe de particules de matière active (3A, 3B, 4A), chaque espace ayant la forme d'un manchon à génératrices verticales et étant délimité par deux grilles (5A, 6A, 6B, 7A), l'une au moins (5A, 6A, 6B, 7A) des grilles étant rigide dans le sens axial et les deux grilles (5A, 7A) situées respectivement le plus à l'intérieur et le plus à l'extérieur étant rigides dans le sens radial, caractérisé en ce que le réacteur comporte au moins trois grilles, dont au moins une grille intermédiaire commune à deux espaces, en ce que chaque grille est libre de se dilater thermiquement dans le sens axial indépendamment des autres grilles, en ce que la ou chaque grille intermédiaire (6A, 6B) est souple dans le sens radial, et en ce que toutes les grilles (5A, 6A, 6B, 7A) sont fixées à leur base sur un fond rigide (8A) solidaire de l'enveloppe (2A) et sont libres à leur extrémité supérieures.

3. Réacteur suivant la revendication 2, caractérisé en ce que l'extrémité supérieure de chaque grille (5A, 6A, 6B, 7A) coulisse le long d'une cloison de guidage (47) solidaire de l'enveloppe (2A).

4. Réacteur suivant l'une quelconque des revendications 1 à 3, caractérisé en ce que le fond (8) est légèrement bombé vers le haut.

5. Réacteur suivant l'une quelconque des revendications 1 à 4, caractérisé en ce que chaque grille (5, 6, 7) présentant de la souplesse dans un sens comporte des ouvertures (21) qui se chevauchent dans ce sens.

6. Réacteur suivant la revendication 5, comportant au moins une grille (6) à souplesse radiale et une grille (5, 7) à souplesse axiale, caractérisé en ce que les ossatures (18) de ces grilles sont réalisées à partir de tôles perforées de façon identique et comportant chacune des rangées parallèles (21) d'ouvertures allongées, ces ouvertures étant décalées d'une rangée à la suivante.

7. Réacteur suivant l'une quelconque des revendications 1 é 5, caractérisé en ce que chaque grille (6A, 6B, 7A) souple dans un sens radial ou axial a une forme ondulée, les ondulations (43) étant orientées perpendiculairement à ce sens.

8. Réacteur suivant l'une quelconque des revendications 1 à 5, caractérisé en ce que l'ossature de chaque grille souple dans le sens axial est constituée d'un empilage d'anneaux ondulés (55) décalés d'un demi-pas d'onde et fixés les uns aux autres par les sommets d'onde (56).

9. Réacteur suivant l'une quelconque des revendications 1 à 5, caractérisé en ce que l'ossature de chaque grille souple dans le sens axial est constituée d'une tôle perforée enroulée en hélice, les spires successives étant reliées par un agrafage axialement souple (57).

10. Réacteur suivant la revendication 7, caractérisé en ce que les grilles ondulées (6A, 6B) portent des éléments chauffants (52) disposées dans certains creux des ondulations.

11. Réacteur suivant l'une quelconque des revendications 1 à 10 caractérisé en ce que ladite seconde région comporte un filtre (26).

12. Réacteur suivant l'une quelconque des revendications 1 à 11, caractérisé en ce que le lit d'adsorbant (3 ; 3A) adjacent à ladite première région est équipé près de la grille (5 ; 5A) qui délimite cette région d'une sonde de température (131 ; 131A).

13. Réacteur suivant la revendication 12, caractérisé en ce que le lit d'adsorbant (3 ; 3A) adjacent à ladite première région est équipé d'une deuxième sonde de température (132 ; 132A) située à une petite distance radiale de la première (131 ; 131A).

14. Réacteur suivant l'une quelconque des revendications 1 à 13, caractérisé en ce que la région centrale (123, 123A) du récipient (1 ; 1A) est pourvue d'un organe à peu près conique (28) de répartition des fluides traversant cette région.

15. Réacteur suivant l'une quelconque des revendications 1 à 14, caractérisé en ce qu'un tube (54) d'admission et d'évacuation de fluide pénètre dans la région centrale (123A) du récipient (1A) à peu près jusqu'à mi-hauteur de la grille centrale (5A).

16. Installation d'épuration par adsorption, caractérisée en ce qu'elle comprend au moins un récipient d'épuration (1) suivant l'une quelconque des revendications 1 à 15, dont la région annulaire extérieure (23) est reliée à la source de fluide à épurer.

17. Installation d'épuration suivant la revendication 16, pour l'épuration d'un gaz, caractérisée en ce que le gaz à épurer est admis dans le récipient (1) en regard d'un fond (8) qui relie les grilles (5, 6, 7) et qui est équipé d'une chicane (31, 32, 33, 35) formant séparateur de gouttelettes.

## Claims

1. Reactor, especially container (1) for purifying fluids by adsorption of the type comprising an envelope (2) of revolution around a vertical axis (X-X) which limits a first region (23) and a second region (123) adapted to be joined respectively to a source and a discharge of a fluid to be treated, the said two regions being separated by at least two spaces defined to comprise each an annular bed of particles of active material (3, 4), each space having the form of a sleeve with vertical generatrices and being limited by two grids (5, 6, 7), at least one (6) of the grids being rigid in the axial direction and the two grids (5,7) respectively situated innermost and outermost being rigid in the radial direction, characterised in that the reactor comprises at least three grids, of which at least one intermediate grid is common to two spaces, that each grid is free to expand thermally in the axial direction independent of the other grids, that the or each intermediate grid (6) is flexible in the radial direction, that all the grids (5, 6, 7) are rigidly united with each other on each end, that only one grid (6) is rigid in the axial direction, while the other grids (5, 7) are flexible in the axial direction, and that the grids (5, 6, 7) are suspended at the envelope (2) and are connected with their basis by a rigid suspended bottom (8).

2. Reactor, especially container (1A) for purifying fluids by adsorption of the type comprising an envelope (2A) of revolution around a vertical axis (X-X) which limits a first region (123A) and a second region (23A) adapted to be joined respectively to a source and a discharge of a fluid to be treated, the said two regions being separated by at least two spaces defined to comprise each an annular bed of particles of active material (3A, 3B, 4A), each space having the form of a sleeve with vertical generatrices and being limited by two grids (5A, 6A, 6B, 7A), at least one (5A, 6A, 6B, 7A) of the grids being rigid in the axial direction and the two grids (5A, 7A) respectively situated innermost and outermost being rigid in the radial direction, characterised in that the reactor comprises at least three grids, of which at least one intermediate grid is common to two spaces, that each grid is free to expand thermally in the axial direction independent of the other grids, that the or each intermediate grid (6A, 6B) is flexible in the radial direction, and that all the grids (5A, 6A, 6B, 7A) are fixed at their basis to the rigid bottom (8A) secured to the envelope (2A) and are free at their upper ends.

3. Reactor according to claim 2, characterised in that the upper end of each grid (5A, 6A, 6B, 7A) is sliding longitudinally to a guiding wall (47) secured to the envelope (2A).

4. Reactor according to one of the claims 1 to 3, characterised in that the bottom (8) is slightly convex upwardly.

5. Reactor according to one of the claims 1 to 4, characterised in that each grid (5, 6, 7) being flexible in one direction comprises apertures (21) which overlap in this direction.

6. Reactor according to claim 5, comprising at least one grid (6) with radial flexibility and one grid (5, 7) with axial flexibility, characterised in that the frame (18) of these grids is realised starting from perforated metal sheets of identical species and each comprising parallel rows (21) of longitudinal apertures these apertures being shifted from a row to the following.

7. Reactor according to one of the claims 1 to 5, characterised in that each grid (6A, 6B, 7A) flexible in a radial or axial direction has an undulated form, the undulations (43) being oriented perpendicularly to the said direction.

8. Reactor according to one of the claims 1 to 5, characterised in that the frame of each grid flexible in the axial direction is constituted by stacked undulated rings (55) displaced by half a wave and fixed to one another by the apexes of the waves (56).

9. Reactor according to one of the claims 1 to 5, characterised in that the frame of each grid flexible in the axial direction is constituted by a perforated metal sheet helically wound, the successive windings being connected by an axially flexible clamping.

10. Reactor according to claim 7, characterised in that the undulated grids (6A, 6B) carry heating elements (52) disposed in certain recesses of the undulations.

11. Reactor according to one of the claims 1 to 10, characterised in that the said second region comprises a filter (26).

12. Reactor according to one of the claims 1 to 11, characterised in that the adsorbing bed (3, 3A) adjacent the said first region is equipped with a temperature sensor (131; 131A) near to the grid (5; 5A) confining this region.

13. Reactor according to claim 12, characterised in that the .adsorbing bed (3 3A) adjacent to the said first region is equipped with a second temperature sensor (132, 132A) situated at a small distance radially of the first (131; 131A).

14. Reactor according to one of the claims 1 to 15, characterised in that the central region (123 ; 123A) of the container (1 ; 1A) is provided with an approximately conical distribution element (28) for the fluids traversing the said region.

15. Reactor according to one of the claims 1 to 14, characterised in that the feeding and discharging tube (54) for the fluid penetrates into the central region (123A) of the container (1A) almost up to the half height of the said central grid (5A).

16. Installation for purifying by adsorption, characterised in that it comprises at least a purifying container (1) according to one of the claims 1 to 15, the exterior annular region (23) of which is connected to the source of fluid to be purified.

17. Installation for purifying according to claim 16 for the purification of a gas, characterised in that the gas to be purified is fed into the container (1) in front of a bottom (8) connecting the grids (5, 6, 7) and which bottom is equipped with deflector plate means (31, 32, 33, 35) forming a separator for droplets.

## Patentansprüche

1. Reaktor, insbesondere Behälter (1) zur Reinigung von Fließmittel durch Adsorption, mit einer Drehhülle (2) um eine vertikale Achse (X-X), die einen ersten Bereich (23) und einen zweiten Bereich (123) begrenzt, welche geeignet sind, jeweils mit einer Quelle und einem Ausgang für das zu behandelnde Fließmittel verbunden zu sein, wobei diese zwei Bereiche durch mindestens zwei Räume getrennt sind, von denen jeder dazu bestimmt ist, ein ringförmiges, festes Bett mit Teilchen aktiven Materials (3, 4) zu enthalten, wobei jeder Raum die Form einer Hülse mit vertikalen Erzeugenden hat und durch zwei Gitter (5, 6, 7) begrenzt ist, wobei mindestens eines (6) der Gitter in axialer Richtung starr ist, und die zwei am weitesten innen bzw. am weitesten außen angeordneten Gitter (5, 7) in radialer Richtung starr sind, dadurch gekennzeichnet, daß der Reaktor mindestens drei Gitter aufweist, von denen mindestens ein Zwischengitter zwei Räumen gemeinsam ist, daß jedes Gitter frei ist, sich in der axialen Richtung unabhängig von den anderen Gittern thermisch auszudehnen, daß das oder jedes Zwischengitter (6) in der radialen Richtung biegsam ist, daß alle Gitter (5, 6, 7) an jedem Ende starr miteinander verbunden sind, und daß nur ein einziges Gitter (6) in der axialen Richtung starr ist, während die anderen Gitter (5, 7) in der axialen Richtung biegsam sind, und daß die Gitter (5, 6, 7) an der Hülle (2) angehängt sind und an ihrer Basis durch einen starren angehängten Boden (8) verbunden sind.

2. Reaktor, insbesondere Behälter (1A) zur Reinigung von Fließmittel durch Adsorption, mit einer Drehhülle (2A) um eine vertikale Achse (X-X), die einen ersten Bereich (123A) und einen zweiten Bereich (23A) begrenzt, die geeignet sind, jeweils mit einer Quelle und einem Ausgang für zu behandelndes Fließmittel verbunden zu werden, wobei diese zwei Bereiche durch mindestens zwei Räume getrennt sind, die dazu bestimmt sind, jeder ein ringförmiges, festes Bett mit Teilchen aktiven Materials (3A, 3B, 4A) zu enthalten, wobei jeder Raum die Form einer Hülse mit vertikalen Erzeugenden hat und durch zwei Gitter (5A, 6A, 6B, 7A) begrenzt ist, wobei mindestens eines (5A, 6A, 6B, 7A) der Gitter in axialer Richtung starr ist und die zwei am weitesten innen bzw. am weitesten außen angeordneten Gitter (5A, 7A) in radialer Richtung starr sind, dadurch gekennzeichnet, daß der Reaktor mindestens drei Gitter aufweist, von denen mindestens ein Zwischengitter zwei Räumen gemeinsam ist, daß jedes Gitter frei ist, sich in der axialen Richtung unabhängig von den anderen Gittern thermisch auszudehnen, daß das oder jedes Zwischengitter (6A, 6B) in der radialen Richtung biegsam ist und daß alle Gitter (5A, 6A, 6B, 7A) an ihrer Basis auf einem starren Boden (8A) befestigt sind, der mit der Hülle (2A) formschlüssig verbunden ist, und an ihrem oberen Ende frei sind.

3. Reaktor nach Anspruch 2, dadurch gekennzeichnet, daß das obere Ende jedes Gitters (5A, 6A, 6B, 7A) längs einer Führungswand (47), die formschlüssig mit der Hülle (2A) verbunden ist, gleitet.

4. Reaktor nach einem der Ansprüche 1 bis 3, dadurch gekennzeichnet, daß der Boden (8) leicht nach oben gewölbt ist.

5. Reaktor nach einem der Ansprüche 1 bis 4, dadurch gekennzeichnet, daß jedes Gitter (5, 6, 7), welches in einer Richtung biegsam ist, Öffnungen (21) aufweist, die sich in dieser Richtung überlappen.

6. Reaktor nach Anspruch 5 mit mindestens einem Gitter (6) mit radialer Biegsamkeit, und einem axial biegbaren Gitter (5, 7) bzw. mit axialer Biegsamkeit, dadurch gekennzeichnet, daß die Gerüste (18) dieser Gitter, ausgehend von Lochblenden identischer Art, hergestellt sind, und jeweils parallele Reihen (21) länglicher Öffnungen aufweisen, wobei diese Öffnungen von einer Reihe zur nächsten versetzt sind.

7. Reaktor nach einem der Ansprüche 1 bis 5, dadurch gekennzeichnet, daß jedes in der radialen oder axialen Richtung biegsame Gitter (6A, 6B, 7A) eine gewellte Form hat, wobei die Wellen (43) senkrecht zu dieser Richtung ausgerichtet sind.

8. Reaktor nach einem der Ansprüche 1 bis 5, dadurch gekennzeichnet, daß das Gerüst jedes in der axialen Richtung biegsamen Gitters aus einem Stapel von gewellten Ringen (55) besteht, die um einen halben Wellenschritt versetzt und durch die Wellenscheitel (56) aneinander befestigt sind.

9. Reaktor nach einem der Ansprüche 1 bis 5, dadurch gekennzeichnet, daß das Gerüst jedes in der axialen Richtung biegsamen Gitters aus einem perforierten, schnecken- bzw. schraubenförmig gewickelten Blech besteht, wobei die aufeinanderfolgenden Windungen durch eine axial biegsame Bördelverbindung (57) verbunden sind.

10. Reaktor nach Anspruch 7, dadurch gekennzeichnet, daß die gewellten Gitter (6A, 6B) Heizelemente (52) tragen, die in bestimmten Wellentälem angeordnet sind.

11. Reaktor nach einem der Ansprüche 1 bis 10, dadurch gekennzeichnet, daß der zweite Bereich einen Filter (26) aufweist.

12. Reaktor nach einem der Ansprüche 1 bis 11, dadurch gekennzeichnet, daß das adsorbierende Bett (3; 3A) neben dem ersten Bereich nahe dem Gitter (5; 5A), welches diesen Bereich begrenzt, mit einem Temperaturfühler (131, 131A) ausgestattet ist.

13. Reaktor nach Anspruch 12, dadurch gekennzeichnet, daß das adsorbierende Bett (3; 3A) neben dem ersten Bereich mit einem zweiten Temperaturfühler (132; 132A) ausgestattet ist, der in einem kleinen Abstand radial von dem ersteren (131; 131A) angeordnet ist.

14. Reaktor nach einem der Ansprüche 1 bis 13, dadurch gekennzeichnet, daß der Mittelbereich (123, 123A) des Behälters (1; 1A) mit einem etwas konischen Organ (28) zur Verteilung von Fließmittel versehen ist, welches diesen Bereich durchquert.

15. Reaktor nach einem der Ansprüche 1 bis 14, dadurch gekennzeichnet, daß ein Zuführ- und ein Abführrohr (54) für Fließmittel in dem Mittelbereich (123A) des Behälters (1A) fast bis zur halben Höhe des mittleren Gitters (5A) eintritt.

16. Anlage zur Adsorptionsreinigung, dadurch gekennzeichnet, daß sie mindestens einen Reinigungsbehälter (1) nach einem der Ansprüche 1 bis 15 aufweist, dessen äußerer Ringbereich (23) mit einer Quelle für zu reinigendes Fließmittel verbunden ist.

17. Reinigungsanlage nach Anspruch 15 zur Reinigung eines Gases, dadurch gekennzeichnet, daß das zu reinigende Gas in den Behälter (1) gegenüber dem Boden (8) zugeführt wird, der die Gitter (5, 6, 7) verbindet und mit einem Hindernis (31, 32, 33, 35) zur Bildung eines Tröpfchentrenners ausgestattet ist.
